# EUROPEAN PATENT APPLICATION

(11) **EP 2 076 011 A1**
(43) Date of publication of application: **01.07.2009**
(21) Application number: 07301682.6
(22) Date of filing: 17.12.2007
(51) Int. Cl.: H04N 1/405

(54) **Method for generating a dithering pattern and corresponding dithering pattern**

(71) Applicant: Deutsche Thomson OHG, 30625 Hannover (DE)
(72) Inventor: Thebault, Cédric, 92648 Boulogne Cedex (FR); Correa, Carlos, 92648 Boulogne Cedex (FR); Weitbruch, Sébastien, 92648 Boulogne Cedex (FR)
(74) Representative: Le Dantec, Claude

(57) **Abstract**

The invention relates to a method for generating a part of a dithering pattern to be applied to data of a video picture to improve its quality. The part comprises a plurality of 2ⁿ dithering values each having n bits. According to the invention, each bit value of the dithering values of this part is computed independently of the other bit values the i^{th} bit of the dithering values of this part is computed by the steps of:
- splitting the part into 2ⁿ⁻ⁱ separated blocks having the same number of values, with 1≤i≤n,
- splitting each separated block into first and second separated sub-blocks having the same number of values, and
- allocating a first bit value to said i^{th} bit of the dithering values of the first sub-block and allocating a second bit value to said i^{th} bit of the dithering values of the second sub-block, the first and second bit values being different and depending on a decision bit associated to each separated block. The decision bit can be a random bit.

## Description

### Field of the invention

The invention relates to a method for generating a dithering pattern to be applied to data of a video picture to improve its quality for example when displayed on a matrix displays like plasma display panels (PDP) or other devices using pulse width modulation.

### Background of the invention

A PDP (Plasma Display Panel) utilizes a matrix array of discharge cells, which can only be "ON", or "OFF". Unlike a CRT (Cathode Ray Tube) or LCD (Liquid Crystal Display) in which video levels are expressed by analogue control of the light emission, a PDP controls the video levels by modulating the number of light pulses per frame. These light pulses are also called sustain pulses. This time-modulation of the light pulses is then integrated by the eye over a period corresponding to the eye time response. Since the video level is portrayed by the number of light pulses occurring at a given frequency, a higher video level means more light pulses. For this reason, this kind of modulation is also known as PWM for Pulse Width Modulation.

This PWM is responsible for one of the PDP image quality problems: the poor grey scale portrayal quality, especially in the darker regions of the picture. This is due to the fact that displayed luminance is linear to the number of pulses, but the eye response and sensitivity to noise is not linear. In darker areas the eye is more sensitive than in brighter areas. This means that even though modern PDPs can display ca. 255 discrete video levels, a quantization error is more noticeable in the darker areas.

As mentioned before, a PDP uses PWM (pulse width modulation) to generate the different video levels. Contrarily to CRTs where luminance is approximately quadratic to applied cathode voltage, luminance is linear to the number of sustain pulses. Therefore an approximately digital quadratic gamma function has to be applied to video before the PWM.

Due to this gamma function, for smaller video levels, many input levels are mapped to the same output level. In other words, for darker areas, the output number of quantization bits is smaller than the input number, in particular for values smaller than 16 (when working with 8 bits for video input) that are all mapped to 0. This also counts for four bit resolution which is actually unacceptable for video.

One known solution to improve the quality of the displayed pictures is to artificially increase the number of displayed video levels by using dithering. Dithering is a known technique for avoiding losing amplitude resolution bits due to truncation. However, this technique only works if the required resolution is available before the truncation step. Usually this is the case in most applications, since the video data after a gamma operation used for pre-correction of the video signal has 16-bit resolution. Dithering can bring back as many bits as those lost by truncation in principle. A 1 bit-dithering corresponds to multiply the number of available output levels by 2, a 2 bit-dithering corresponds to multiply the number of available output levels by 4 and a 3 bit-dithering corresponds to multiply the number of available output levels by 8.

Dithering is applied to video data by using a dithering pattern. The values of this dithering pattern are added to the video data after the gamma operation and the resulting video data are then truncated (truncation step).

The current dithering techniques give good results in terms of quantization error but introduce a dithering noise in the displayed pictures (like the error diffusion technique) or suffer from the dithering pattern visibility.

### Summary of the invention

The invention is aimed at alleviating the drawbacks of the prior art.

The present invention concerns a method for generating at least one part of a dithering pattern, this part comprising 2ⁿ dithering values each having n bits, wherein each bit value of the dithering values of the part is computed independently of the other bit values and in that, the n^{th} bit of a dithering value being the least significant bit of said dithering value, the i^{th} bit of the dithering values of the part is computed by the steps of:
- splitting the part into 2ⁿ⁻ⁱ separated blocks having the same number of values, with 1≤i≤n,
- splitting each separated block into first and second separated sub-blocks having the same number of values, and
- allocating a first bit value to said i^{th} bit of the dithering values of the first sub-block and allocating a second bit value to said i^{th} bit of the dithering values of the second sub-block, said first and second bit values being different and depending on a decision bit associated to each separated block.

In a first embodiment, the first bit value is equal to the value of the decision bit and the second bit value is equal to a value different from the decision bit.

In a second embodiment, the second bit value is equal to the value of the decision bit and the first bit value is equal to a value different from the decision bit.

The decision bit associated to each block can be determined randomly. In a variant, it is a deterministic bit. In this variant, the decision bit associated to the blocks of the part changes alternatively between two values at each row and/or column of blocks of the part. It is also possible to change this decision bit at each video frame.

The dithering pattern resulting from this method comprises 2ⁿ different dithering values having each n bits and these values are distributed randomly over the whole pattern. Consequently, the invention concerns also a dithering pattern comprising 2ⁿ dithering values having each n bits wherein the 2ⁿ dithering values are different and distributed randomly over the whole pattern.

### Brief description of the drawings

Exemplary embodiments of the invention are illustrated in the drawings and are explained in more detail in the following description. In the drawings:
- Fig.1: shows a dithering pattern comprising different parts to be generated;
- Fig.2: illustrates the steps of the method according to the invention, and
- Fig.3: illustrates the generation of a part of a dithering pattern comprising 16x16 dithering values, each value of the dithering pattern being a 8-bit value, according the method of Fig.2.

### DESCRIPTION OF PREFERRED EMBODIMENTS

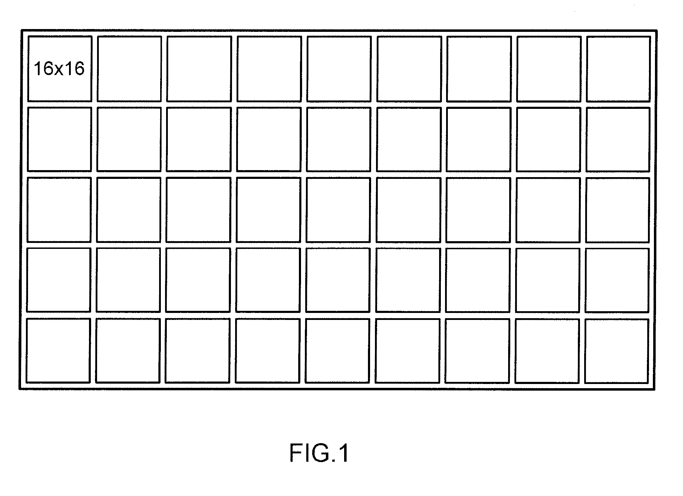

To generate a dithering pattern comprising 8-bit dithering values, the dithering pattern is generated part by part, each part comprising 2⁸ dithering values and each dithering value being intended to be added to a pixel value (eventually after application of a gamma function) of an image. This generation is illustrated by **figure 1** where a dithering pattern comprising 144x80 dithering values is generated part by part, each part comprising 16x16 adjacent dithering values. In the figure 1, the dithering pattern comprises 45 parts of 16x16 dithering values. In the following specification, the dithering pattern comprises parts, each part comprising blocks of dithering values and each block comprising sub-blocks of dithering values. In the whole following specification, the dithering pattern and the parts or blocks of it have a rectangular or square shape but they can have other shapes. These shapes have been adopted to simplify the drawings and the explanations.

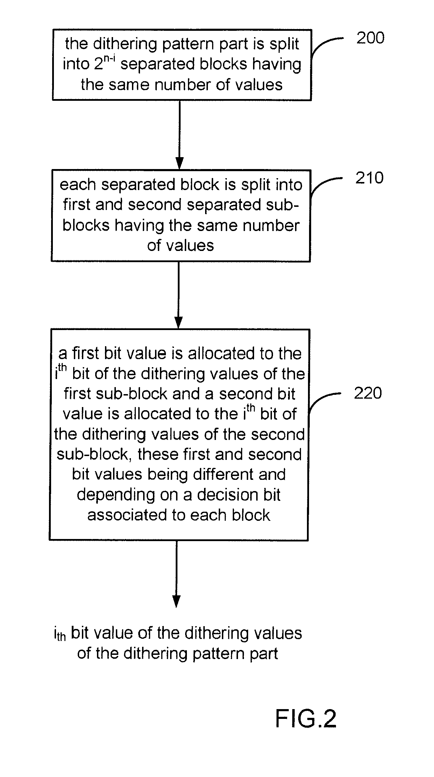

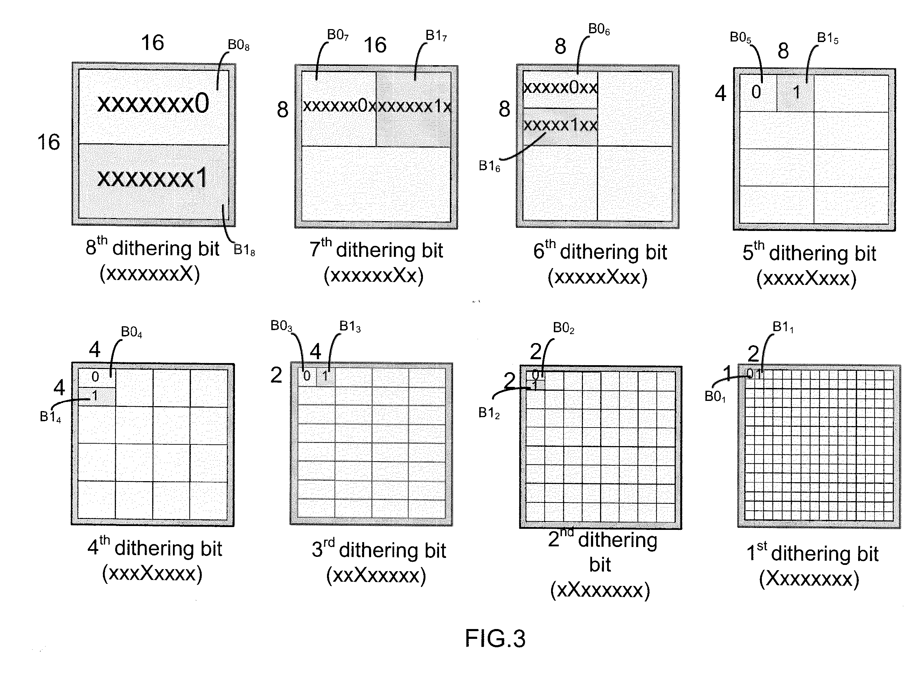

The present invention proposes a method for generating at least one part of the dithering pattern. It will be assumed that the part to be generated comprises 2ⁿ dithering values each having n bits. According to the invention, each bit value of the dithering values of the part is computed independently of the other bit values. The i^{th} bit of the dithering values of the part is computed by the steps shown at **figure 2**. It can be noted that the n^{th} bit of a dithering value designates the least significant bit of the dithering value and that the 1^{st} bit of a dithering value designates the most significant bit of the dithering value. The bit values can be computed one after the other in the descending order of the parameter i as illustrated by Figure 3, in the ascending order of the parameter i or in a different order. They can also be computed in parallel. It is possible because each bit value of a dithering value is computed independently of the other bit values of the dithering value. In reference to figure 2, the method comprises the following steps:
- at step 200, the part is split into 2ⁿ⁻ⁱ separated blocks having the same number of values, with 1≤i≤n,
- at step 210, each separated block is split into first and second separated sub-blocks having the same number of values, and
- at step 220, a first bit value is allocated to the i^{th} bit of the dithering values of the first sub-block and a second bit value is allocated to the i^{th} bit of the dithering values of the second sub-block, these first and second bit values being different and depending on a decision bit associated to each block.

The decision bit can be random or deterministic as it will be described later.

**Figure 3** illustrates the generation of a part of a dithering pattern comprising 16x16 adjacent dithering values, each value of the dithering pattern being a 8-bit value. The number of values in the part is linked to the number of bits of the dithering values to be generated. The dithering pattern is split into parts of 2ⁿ values to generate n-bit dithering values.

In reference to Figure 3, the 8^{th} bit of the dithering values of the part of dithering pattern (which is identical to a block for this bit) is computed by splitting the part into first and second separated sub-blocks B0₈ and B1₈ of 8x16 values, allocating a first bit value to the i^{th} bit of the dithering values of the first sub-block B0₈ and allocating a second bit value to the i^{th} bit of the dithering values of the second sub-block B1₈, the first and second bit values being different and depending on a decision bit associated to the block. In the example of figure 3, the bit value 0 is allocated to the 8^{th} bit of the dithering values of the sub-block B0₈ and the bit value 1 is allocated to the 8^{th} bit of the dithering values of the sub-block B1₈. If the decision bit is equal to 0, it means in the example of figure 3 that the value of the decision bit (=0) is allocated to the 8^{th} bit of the dithering values of the sub-block B0₈ and that a value different from the decision bit (=1) is allocated to the 8^{th} bit of the dithering values of the second B1₈. Inversely, If the decision bit is equal to 1, it means in the example of figure 3 that the value of the decision bit (=1) is allocated to the 8^{th} bit of the dithering values of the sub-block B1₈ and that a value different from the decision bit (=0) is allocated to the 8^{th} bit of the dithering values of the sub-block 80₈.

In reference to Figure 3, the 7^{th} bit of the dithering values of the part of dithering pattern is computed by splitting this part into 2 separated blocks comprising 8x16 values and then splitting these separated (upper block and lower block) blocks into first and second separated sub-blocks comprising 8x8 values. A first bit value is allocated to the 7^{th} bit of the dithering values of the first sub-block of each block and a second bit value is allocated to the 7^{th} bit of the dithering values of the second sub-block of each block, the first and second bit values being different and depending on a decision bit associated to the considered block. In the example of figure 3, the bit value 0 is allocated to the 7^{th} bit of the dithering values of a sub-block B0₇ and the bit value 1 is allocated to the 7^{th} bit of the dithering values of a sub-block B1₇. If the decision bit of the upper block is equal to 0, it means in the example of figure 3 that the value of the decision bit (=0) is allocated to the 7^{th} bit of the dithering values of the sub-block B0₇ and that a value different from the decision bit (=1) is allocated to the 7^{th} bit of the dithering values of the sub-block 81₇. Inversely, If the decision bit is equal to 1, it means in the example of figure 3 that the value of the decision bit (=1) is allocated to the 7^{th} bit of the dithering values of the sub-block B1₇ and that a value different from the decision bit (=0) is allocated to the 7^{th} bit of the dithering values of the sub-block B0₇.

In reference to Figure 3, the 6^{th} bit of the dithering values of the part of dithering pattern is computed by splitting this part into 4 separated blocks comprising 8x8 values and then splitting these separated blocks into first and second separated sub-blocks comprising 4x8 values. A first bit value is allocated to the 6^{th} bit of the dithering values of the first sub-block of each block and a second bit value is allocated to the 6^{th} bit of the dithering values of the second sub-block of each block, the first and second bit values being different and depending on a decision bit associated to the considered block. In the example of figure 3, the bit value 0 is allocated to the 6^{th} bit of the dithering values of a sub-block B0₆ and the bit value 1 is allocated to the 6^{th} bit of the dithering values of a sub-block B1_{6.} If the decision bit of the upper block is equal to 0, it means in the example of figure 3 that the value of the decision bit (=0) is allocated to the 6^{th} bit of the dithering values of the sub-block B0₆ and that a value different from the decision bit (=1) is allocated to the 6^{th} bit of the dithering values of the sub-block B1₆. Inversely, If the decision bit is equal to 1, it means in the example of figure 3 that the value of the decision bit (=1) is allocated to the 6^{th} bit of the dithering values of the sub-block B1₆ and that a value different from the decision bit (=0) is allocated to the 6^{th} bit of the dithering values of the sub-block B0₆.

In reference to Figure 3, the 5^{th} bit of the dithering values of the part of dithering pattern is computed by splitting this part into 8 separated blocks comprising 4x8 values and then splitting these separated blocks into first and second separated sub-blocks comprising 4x4 values. A first bit value is allocated to the 5^{th} bit of the dithering values of the first sub-block of each block and a second bit value is allocated to the 5^{th} bit of the dithering values of the second sub-block of each block, the first and second bit values being different and depending on a decision bit associated to the considered block. In the example of figure 3, the bit value 0 is allocated to the 5^{th} bit of the dithering values of a sub-block B0₅ and the bit value 1 is allocated to the 5^{th} bit of the dithering values of a sub-block B1₅. If the decision bit of the upper block is equal to 0, it means in the example of figure 3 that the value of the decision bit (=0) is allocated to the 5^{th} bit of the dithering values of the sub-block B0₅ and that a value different from the decision bit (=1) is allocated to the 5^{th} bit of the dithering values of the sub-block B1₅. Inversely, If the decision bit is equal to 1, it means in the example of figure 3 that the value of the decision bit (=1) is allocated to the 5^{th} bit of the dithering values of the sub-block B1₅ and that a value different from the decision bit (=0) is allocated to the 5^{th} bit of the dithering values of the sub-block B0₅.

In reference to Figure 3, the 4^{th} bit of the dithering values of the part of dithering pattern is computed by splitting this part into 16 separated blocks comprising 4x4 values and then splitting these separated blocks into first and second separated sub-blocks comprising 2x4 values. A first bit value is allocated to the 4^{th} bit of the dithering values of the first sub-block of each block and a second bit value is allocated to the 4^{th} bit of the dithering values of the second sub-block of each block, the first and second bit values being different and depending on a decision bit associated to the considered block. In the example of figure 3, the bit value 0 is allocated to the 4^{th} bit of the dithering values of a sub-block B0₄ and the bit value 1 is allocated to the 4^{th} bit of the dithering values of a sub-block B1₄. If the decision bit of the upper block is equal to 0, it means in the example of figure 3 that the value of the decision bit (=0) is allocated to the 4^{th} bit of the dithering values of the sub-block B0₄ and that a value different from the decision bit (=1) is allocated to the 4^{th} bit of the dithering values of the sub-block B1₄. Inversely, If the decision bit is equal to 1, it means in the example of figure 3 that the value of the decision bit (=1) is allocated to the 4^{th} bit of the dithering values of the sub-block B1₄ and that a value different from the decision bit (=0) is allocated to the 4^{th} bit of the dithering values of the sub-block B0₄.

In reference to Figure 3, the 3^{rd} bit of the dithering values of the part of dithering pattern is computed by splitting this part into 16 separated blocks comprising 2x4 values and then splitting these separated blocks into first and second separated sub-blocks comprising 2x2 values. A first bit value is allocated to the 3^{rd} bit of the dithering values of the first sub-block of each block and a second bit value is allocated to the 3^{rd} bit of the dithering values of the second sub-block of each block, the first and second bit values being different and depending on a decision bit associated to the considered block.

In the example of figure 3, the bit value 0 is allocated to the 3^{rd} bit of the dithering values of a sub-block B0₃ and the bit value 1 is allocated to the 3^{rd} bit of the dithering values of a sub-block B1₃. If the decision bit of the upper block is equal to 0, it means in the example of figure 3 that the value of the decision bit (=0) is allocated to the 3^{rd} bit of the dithering values of the sub-block B0₃ and that a value different from the decision bit (=1) is allocated to the 3^{rd} bit of the dithering values of the sub-block B1₃. Inversely, If the decision bit is equal to 1, it means in the example of figure 3 that the value of the decision bit (=1) is allocated to the 3^{rd} bit of the dithering values of the sub-block B1₃ and that a value different from the decision bit (=0) is allocated to the 3^{rd} bit of the dithering values of the sub-block B0₃.

In reference to Figure 3, the 2^{nd} bit of the dithering values of the part of dithering pattern is computed by splitting this part into 32 separated blocks comprising 2x2 values and then splitting these separated blocks into first and second separated sub-blocks comprising 1x2 values. A first bit value is allocated to the 2^{nd} bit of the dithering values of the first sub-block of each block and a second bit value is allocated to the 2^{nd} bit of the dithering values of the second sub-block of each block, the first and second bit values being different and depending on a decision bit associated to the considered block. In the example of figure 3, the bit value 0 is allocated to the 2^{nd} bit of the dithering values of a sub-block B0₂ and the bit value 1 is allocated to the 2^{nd} bit of the dithering values of a sub-block B1_{2.} If the decision bit of the upper block is equal to 0, it means in the example of figure 3 that the value of the decision bit (=0) is allocated to the 2^{nd} bit of the dithering values of the sub-block B0₂ and that a value different from the decision bit (=1) is allocated to the 2^{nd} bit of the dithering values of the sub-block B1₂. Inversely, If the decision bit is equal to 1, it means in the example of figure 3 that the value of the decision bit (=1) is allocated to the 2^{nd} bit of the dithering values of the sub-block B1₂ and that a value different from the decision bit (=0) is allocated to the 2^{nd} bit of the dithering values of the sub-block B0₂.

In reference to Figure 3, the 1^{st} bit of the dithering values of the part of dithering pattern is computed by splitting this part into 32 separated blocks comprising 1x2 values and then splitting these separated blocks into first and second separated sub-blocks comprising only one value. A first bit value is allocated to the 1^{st} bit of the dithering values of the first sub-block of each block and a second bit value is allocated to the 1^{st} bit of the dithering values of the second sub-block of each block, the first and second bit values being different and depending on a decision bit associated to the considered block. In the example of figure 3, the bit value 0 is allocated to the 1^{st} bit of the dithering values of a sub-block B0₁ and the bit value 1 is allocated to the 1^{st} bit of the dithering values of a sub-block B1₁. If the decision bit of the upper block is equal to 0, it means in the example of figure 3 that the value of the decision bit (=0) is allocated to the 1^{st} bit of the dithering values of the sub-block B0₁ and that a value different from the decision bit (=1) is allocated to the 1^{st} bit of the dithering values of the sub-block B1₁. Inversely, If the decision bit is equal to 1, it means in the example of figure 3 that the value of the decision bit (=1) is allocated to the 1^{st} bit of the dithering values of the sub-block B1₁ and that a value different from the decision bit (=0) is allocated to the 1^{st} bit of the dithering values of the sub-block B0₁.

A decision bit is associated to each block. This decision bit can be defined randomly for each block. In a variant, it can be predetermined for a first row or column of blocks and then changed at each next row or column of blocks. For example, this decision bit is 1 for the even rows or columns of blocks and 0 for the odd row or column of blocks. In another variant, it can change at each video frame. For example, this decision bit is 1 for the even rows or columns of blocks and 0 for the odd row or column of blocks in the even video frames and this decision bit is 0 for the even rows or columns of blocks and 1 for the odd row or column of blocks in the odd video frames.

Examples of dithering pattern parts for 4 consecutive video frames are given below:

**Frame 1**

| | | | | | | | | | | | | | | | |
|---|---|---|---|---|---|---|---|---|---|---|---|---|---|---|---|
| 180 | 52 | 148 | 20 | 252 | 124 | 220 | 92 | 242 | 114 | 210 | 82 | 186 | 58 | 218 | 90 |
| 116 | 244 | 84 | 212 | 60 | 188 | 28 | 156 | 50 | 178 | 18 | 146 | 122 | 250 | 26 | 154 |
| 196 | 68 | 164 | 36 | 204 | 76 | 236 | 108 | 130 | 2 | 226 | 98 | 202 | 74 | 234 | 106 |
| 4 | 132 | 100 | 228 | 12 | 140 | 44 | 172 | 66 | 194 | 34 | 162 | 10 | 138 | 42 | 170 |
| 240 | 112 | 144 | 16 | 232 | 104 | 136 | 8 | 190 | 62 | 158 | 30 | 166 | 38 | 198 | 70 |
| 48 | 176 | 80 | 208 | 40 | 168 | 72 | 200 | 126 | 254 | 94 | 222 | 102 | 230 | 6 | 134 |
| 192 | 64 | 224 | 96 | 152 | 24 | 248 | 120 | 142 | 14 | 238 | 110 | 214 | 86 | 182 | 54 |
| 0 | 128 | 32 | 160 | 88 | 216 | 56 | 184 | 78 | 206 | 46 | 174 | 22 | 150 | 118 | 246 |
| 229 | 101 | 133 | 5 | 189 | 61 | 221 | 93 | 227 | 99 | 195 | 67 | 235 | 107 | 203 | 75 |
| 37 | 165 | 69 | 197 | 125 | 253 | 29 | 157 | 35 | 163 | 3 | 131 | 43 | 171 | 11 | 139 |
| 149 | 21 | 181 | 53 | 141 | 13 | 173 | 45 | 211 | 83 | 243 | 115 | 219 | 91 | 187 | 59 |
| 85 | 213 | 117 | 245 | 77 | 205 | 109 | 237 | 19 | 147 | 51 | 179 | 27 | 155 | 123 | 251 |
| 249 | 121 | 153 | 25 | 225 | 97 | 193 | 65 | 247 | 119 | 215 | 87 | 191 | 63 | 159 | 31 |
| 57 | 185 | 89 | 217 | 33 | 161 | 1 | 129 | 55 | 183 | 23 | 151 | 127 | 255 | 95 | 223 |
| 201 | 73 | 169 | 41 | 145 | 17 | 177 | 49 | 199 | 71 | 167 | 39 | 143 | 15 | 239 | 111 |
| 9 | 137 | 105 | 233 | 81 | 209 | 113 | 241 | 7 | 135 | 103 | 231 | 79 | 207 | 47 | 175 |

**Frame 2**

| | | | | | | | | | | | | | | | |
|---|---|---|---|---|---|---|---|---|---|---|---|---|---|---|---|
| 63 | 191 | 31 | 159 | 55 | 183 | 23 | 151 | 97 | 225 | 1 | 129 | 105 | 233 | 9 | 137 |
| 255 | 127 | 223 | 95 | 247 | 119 | 215 | 87 | 161 | 33 | 193 | 65 | 169 | 41 | 201 | 73 |
| 79 | 207 | 47 | 175 | 7 | 135 | 103 | 231 | 81 | 209 | 49 | 177 | 25 | 153 | 57 | 185 |
| 143 | 15 | 239 | 111 | 199 | 71 | 167 | 39 | 145 | 17 | 241 | 113 | 217 | 89 | 249 | 121 |
| 43 | 171 | 75 | 203 | 99 | 227 | 67 | 195 | 37 | 165 | 69 | 197 | 109 | 237 | 13 | 141 |
| 235 | 107 | 139 | 11 | 163 | 35 | 131 | 3 | 229 | 101 | 133 | 5 | 173 | 45 | 205 | 77 |
| 91 | 219 | 123 | 251 | 83 | 211 | 51 | 179 | 21 | 149 | 117 | 245 | 93 | 221 | 125 | 253 |
| 155 | 27 | 187 | 59 | 147 | 19 | 243 | 115 | 213 | 85 | 181 | 53 | 157 | 29 | 189 | 61 |
| 100 | 228 | 4 | 132 | 44 | 172 | 76 | 204 | 122 | 250 | 90 | 218 | 34 | 162 | 2 | 130 |
| 164 | 36 | 196 | 68 | 236 | 108 | 140 | 12 | 186 | 58 | 154 | 26 | 226 | 98 | 194 | 66 |
| 84 | 212 | 116 | 244 | 92 | 220 | 124 | 252 | 74 | 202 | 42 | 170 | 18 | 146 | 114 | 242 |
| 148 | 20 | 180 | 52 | 156 | 28 | 188 | 60 | 138 | 10 | 234 | 106 | 210 | 82 | 178 | 50 |
| 104 | 232 | 72 | 200 | 48 | 176 | 16 | 144 | 38 | 166 | 6 | 134 | 126 | 254 | 94 | 222 |
| 168 | 40 | 136 | 8 | 240 | 112 | 208 | 80 | 230 | 102 | 198 | 70 | 190 | 62 | 158 | 30 |
| 88 | 216 | 56 | 184 | 0 | 128 | 96 | 224 | 22 | 150 | 54 | 182 | 78 | 206 | 110 | 238 |
| 152 | 24 | 248 | 120 | 192 | 64 | 160 | 32 | 214 | 86 | 246 | 118 | 142 | 14 | 174 | 46 |

**Frame 3**

| | | | | | | | | | | | | | | | |
|---|---|---|---|---|---|---|---|---|---|---|---|---|---|---|---|
| 254 | 126 | 222 | 94 | 182 | 54 | 150 | 22 | 172 | 44 | 140 | 12 | 244 | 116 | 148 | 20 |
| 62 | 190 | 30 | 158 | 118 | 246 | 86 | 214 | 108 | 236 | 76 | 204 | 52 | 180 | 84 | 212 |
| 142 | 14 | 238 | 110 | 134 | 6 | 166 | 38 | 220 | 92 | 188 | 60 | 132 | 4 | 164 | 36 |
| 78 | 206 | 46 | 174 | 70 | 198 | 102 | 230 | 28 | 156 | 124 | 252 | 68 | 196 | 100 | 228 |
| 162 | 34 | 194 | 66 | 170 | 42 | 202 | 74 | 232 | 104 | 200 | 72 | 240 | 112 | 144 | 16 |
| 98 | 226 | 2 | 130 | 106 | 234 | 10 | 138 | 40 | 168 | 8 | 136 | 48 | 176 | 80 | 208 |
| 146 | 18 | 178 | 50 | 218 | 90 | 186 | 58 | 216 | 88 | 184 | 56 | 128 | 0 | 224 | 96 |
| 82 | 210 | 114 | 242 | 26 | 154 | 122 | 250 | 24 | 152 | 120 | 248 | 64 | 192 | 32 | 160 |
| 161 | 33 | 193 | 65 | 233 | 105 | 137 | 9 | 171 | 43 | 139 | 11 | 163 | 35 | 131 | 3 |
| 97 | 225 | 1 | 129 | 41 | 169 | 73 | 201 | 107 | 235 | 75 | 203 | 99 | 227 | 67 | 195 |
| 209 | 81 | 241 | 113 | 217 | 89 | 249 | 121 | 155 | 27 | 187 | 59 | 147 | 19 | 243 | 115 |
| 17 | 145 | 49 | 177 | 25 | 153 | 57 | 185 | 91 | 219 | 123 | 251 | 83 | 211 | 51 | 179 |
| 189 | 61 | 221 | 93 | 165 | 37 | 133 | 5 | 175 | 47 | 143 | 15 | 247 | 119 | 215 | 87 |
| 125 | 253 | 29 | 157 | 101 | 229 | 69 | 197 | 111 | 239 | 79 | 207 | 55 | 183 | 23 | 151 |
| 141 | 13 | 237 | 109 | 213 | 85 | 245 | 117 | 159 | 31 | 255 | 127 | 199 | 71 | 167 | 39 |
| 77 | 205 | 45 | 173 | 21 | 149 | 53 | 181 | 95 | 223 | 63 | 191 | 7 | 135 | 103 | 231 |

**Frame 4**

| | | | | | | | | | | | | | | | |
|---|---|---|---|---|---|---|---|---|---|---|---|---|---|---|---|
| 103 | 231 | 71 | 199 | 111 | 239 | 79 | 207 | 33 | 161 | 65 | 193 | 41 | 169 | 73 | 201 |
| 167 | 39 | 135 | 7 | 175 | 47 | 143 | 15 | 225 | 97 | 129 | 1 | 233 | 105 | 137 | 9 |
| 23 | 151 | 119 | 247 | 95 | 223 | 63 | 191 | 17 | 145 | 113 | 241 | 89 | 217 | 121 | 249 |
| 215 | 87 | 183 | 55 | 159 | 31 | 255 | 127 | 209 | 81 | 177 | 49 | 153 | 25 | 185 | 57 |
| 123 | 251 | 27 | 155 | 35 | 163 | 3 | 131 | 109 | 237 | 13 | 141 | 53 | 181 | 85 | 213 |
| 187 | 59 | 219 | 91 | 227 | 99 | 195 | 67 | 173 | 45 | 205 | 77 | 245 | 117 | 149 | 21 |
| 11 | 139 | 43 | 171 | 19 | 147 | 115 | 243 | 93 | 221 | 61 | 189 | 5 | 133 | 37 | 165 |
| 203 | 75 | 235 | 107 | 211 | 83 | 179 | 51 | 157 | 29 | 253 | 125 | 197 | 69 | 229 | 101 |
| 60 | 188 | 92 | 220 | 116 | 244 | 20 | 148 | 42 | 170 | 10 | 138 | 114 | 242 | 82 | 210 |
| 252 | 124 | 156 | 28 | 180 | 52 | 212 | 84 | 234 | 106 | 202 | 74 | 178 | 50 | 146 | 18 |
| 12 | 140 | 44 | 172 | 4 | 132 | 36 | 164 | 26 | 154 | 122 | 250 | 66 | 194 | 34 | 162 |
| 204 | 76 | 236 | 108 | 196 | 68 | 228 | 100 | 218 | 90 | 186 | 58 | 130 | 2 | 226 | 98 |
| 56 | 184 | 24 | 152 | 112 | 240 | 80 | 208 | 110 | 238 | 78 | 206 | 38 | 166 | 6 | 134 |
| 248 | 120 | 216 | 88 | 176 | 48 | 144 | 16 | 174 | 46 | 142 | 14 | 230 | 102 | 198 | 70 |
| 8 | 136 | 104 | 232 | 64 | 192 | 32 | 160 | 94 | 222 | 126 | 254 | 22 | 150 | 54 | 182 |
| 200 | 72 | 168 | 40 | 128 | 0 | 224 | 96 | 158 | 30 | 190 | 62 | 214 | 86 | 246 | 118 |

By this method, the energy is distributed over the whole dithering pattern because the pattern comprises different values (256 different values for a 16x16 pattern dithering) and because these values are randomly distributed over the whole pattern.

For the dithering operation, the values of the dithering pattern are used as follows : once the dithering pattern is defined, it is added pixel by pixel to the video levels, the resulting video levels being then truncated. This dithering operation can be used by example for a linear display device; in this case, the dithering values are added pixel by pixel to the video levels after gammatization.

The invention can be used in particular in Patent Display Panels (PDPs). However, use of the invention is also appropriate for matrix displays where the light emission/generation is also controlled with small pulses, i.e. where the PWM principle is used for controlling brightness. The invention can also be used in a printing device.

It is noted that the disclosed embodiment is an example and that the number of dithering bits as well as the size and the forms of the blocks and the way the decision bit is defined can be subject of modification in other embodiments.

## Claims

1. Method for generating at least one part of a dithering pattern, said part comprising 2ⁿ dithering values each having n bits, **characterized in that** each bit value of the dithering values of said part is computed independently of the other bit values and **in that**, the n^{th} bit of a dithering value being the least significant bit of said dithering value, the i^{th} bit of the dithering values of said part is computed by the steps of:
- splitting said part into 2ⁿ⁻ⁱ separated blocks having the same number of values, with 1≤i≤n,
- splitting each separated block into first and second separated sub-blocks having the same number of values, and
- allocating a first bit value to said i^{th} bit of the dithering values of the first sub-block and allocating a second bit value to said i^{th} bit of the dithering values of the second sub-block, said first and second bit values being different and depending on a decision bit associated to each separated block.

2. Method according to claim 1, wherein the first bit value is equal to the value of the decision bit and the second bit value is equal to a value different from the decision bit.

3. Method according to claim 1, wherein the second bit value is equal to the value of the decision bit and the first bit value is equal to a value different from the decision bit.

4. Method according to claim 1, wherein the decision bit is a random bit.

5. Method according to claim 1, wherein the decision bit is a deterministic bit.

6. Method according to claim 5, wherein the decision bit associated to the blocks of said part changes alternatively between two values at each row and/or column of blocks of said part.

7. Method according to claim 5 or 6, wherein the decision bit associated to the blocks of said part changes at each video frame.

8. Dithering pattern comprising 2ⁿ dithering values having each n bits **characterized in that** the 2ⁿ dithering values are different and distributed randomly over the whole pattern.

9. Dithering pattern wherein it is generated by the method according to any one of the claims 1 to 7.
